# EUROPÄISCHE PATENTSCHRIFT

(11) **EP 1 834 931 B1**
(45) Veröffentlichungstag und Bekanntmachung des Hinweises auf die Patenterteilung: **02.06.2010**
(21) Anmeldenummer: 07004397.1
(22) Anmeldetag: 03.03.2007
(51) Int. Cl.: C03B 35/26, C03B 23/09

(54) **Verfahren und Vorrichtung zum Anschmelzen von Stangenenden**
Method and device for partial melting of rod ends
Procédé et dispositif destinés à la fonte d'embouts de barres

(30) Priorität: 16.03.2006 DE 102006012583
(43) Veröffentlichungstag der Anmeldung: 19.09.2007
(73) Patentinhaber: Schott AG, 55122 Mainz (DE)
(72) Erfinder: Piegendorfer, Johann, 84169 Altfraunhofen (DE); Zöttl, Martin, 84184 Tiefenbach (DE)
(74) Vertreter: Herden, Andreas F.

(56) Entgegenhaltungen:
- DE-C- 324 750
- DE-C- 637 506
- GB-A- 365 594
- GB-A- 1 056 873
- US-A- 3 066 506
- US-A- 4 385 919

## Beschreibung

Die Erfindung betrifft allgemein die Nachbearbeitung von stangenförmigem aufschmelzbarem Material, insbesondere das Aufschmelzen der Enden von Glasstangen.

Stangenförmiges Glasmaterial, sowohl als Vollmaterial als auch in Form von Rohren wird für viele Anwendungen in Abschnitte unterteilt und diese Abschnitte weiterverwendet. Beispielsweise werden Glasrohr-Abschnitte zur Herstellung von Reed-Schaltern eingesetzt. Ebenso kommen Glasrohr-Abschnitte auch als Verpackungen für weitere elektrische und elektronische Komponenten zum Einsatz. Abschnitte von Glas-Vollstäben werden weiterhin auch als Lichtleiter eingesetzt.

Aus der DE 637 506 C ist eine Vorrichtung zum Umformen der Enden abgepasster Glasrohre gemäß dem Oberbegriff der Ansprüche 1 und 21 bekannt, wobei die Glasrohre mit einer Beförderungseinrichtung an Brennern vorbeibewegt werden, während diese durch sich drehende Rollenlager gedreht werden. Die erwärmten Enden werden dann dann zu Hälsen umgeformt.

Die GB 365 594 A zeigt eine ähnliche Vorrichtung, wobei Glasrohre auf jeweils zwei versetzten Rollen aufliegend gedreht und dabei erwärmt werden. Die Rohre werden sukzessive durch bewegte Trägerschienen angehoben und auf dem nächsten Rollenpaar zur Weiterverarbeitung abgelegt. Eine ähnliche Anordung zeigt auch die US 3,066,506. Auch in der DE 324 750 werden Glasrohre zur Heisbearbeitung sukzessive auf rotierenden Rollenpaaren abgelegt. Die Beförderung von einem zum nächsten Rollenpaar geschieht mittels bewegter Haken.

Die Abschnitte werden im allgemeinen durch Brechen von der Stange abgetrennt. Allerdings können die Bruchkanten Probleme verursachen. Unter anderem können von den Bruchkanten ausgehende Risse die Stabilität herabsetzten, die optischen Eigenschaften bei Lichtleitern negativ beeinflussen und bei Glasrohren zu Undichtigkeiten führen. Auch sind die beim Brechen entstehenden scharfen Kanten in vielen Fällen unerwünscht. Um diese Probleme zu vermeiden, bietet es sich an, die Enden anzuschmelzen. Auch dabei können jedoch Probleme auftreten, wenn das Aufschmelzen nicht gleichmäßig geschieht. In diesem Fall können unter anderem nachteilige, nicht tolerierbare Abweichungen von den gewünschten Abmessungen der Abschnitte auftreten. Der Erfindung liegt demgemäß die Aufgabe zugrunde, ein besonders gleichmäßiges Aufschmelzen der Abschnittenden zu ermöglichen. Diese Aufgabe wird bereits in höchst überraschend einfacher Weise durch den Gegenstand der unabhängigen Ansprüche gelöst. Vorteilhafte Ausgestaltungen und Weiterbildungen der Erfindung sind in den jeweiligen abhängigen Ansprüchen angegeben.

Demgemäß sieht die Erfindung ein Verfahren zum Behandeln der Enden von Glasstangen vor, bei welchem Glasstangen in Aufnahmen eines Trägers eingelegt und mit dem Träger an einem Brenner und zumindest einer Schiene entlang einer Vorschubrichtung vorbeibewegt werden, wobei die Flamme des Brenners zumindest ein Ende der Glasstangen, insbesondere die Stirnfläche an diesem Ende aufschmilzt, und wobei die Glasstangen durch die Schienen in den Aufnahmen angehoben werden und auf der Schiene abrollen, so daß die Glasstangen während des Aufschmelzens in Rotation versetzt werden.

Eine entsprechende Vorrichtung zum Behandeln der Enden von Glasstangen, insbesondere zur Durchführung des erfindungsgemäßen Verfahrens umfasst einen Brenner, einen Träger mit Aufnahmen zum Einlegen von Glasstangen, eine Vorschub-Einrichtung zum Vorbeiführen des Trägers am Brenner, sowie zumindest eine Schiene, welche entlang des Trägers verläuft und deren Oberseite im Bereich des Brenners oberhalb des tiefsten Punktes der Aufnahmen verläuft, so daß in die Aufnahmen eingelegte Glasstangen beim Vorbeiführen an der Flamme des Brenners mittels der Vorschub-Einrichtung in den Aufnahmen durch die Schiene angehoben werden und auf den Oberseiten der Schiene abrollen. Die Glasstangen werden bevorzugt in entsprechend ausgestaltete Aufnahmen quer zur Vorschubrichtung eingelegt.

Eine Vorschub-Einrichtung kann insbesondere ein geeignetes Transportband umfassen, auf welches der Träger abgelegt wird. Ein derartiger Transportmechanismus erlaubt in einfacher Weise auch den Transport verschiedenartiger Träger für verschiedene Stangenabmessungen.

Bevorzugt sind der Brenner und die Schienen stationär angeordnet, wobei in diesem Fall der Träger am Brenner vorbeibewegt wird. Ebenfalls möglich ist jedoch, daß die Vorschub-Einrichtung nicht den Träger, sondern anstelle dessen den Brenner und die Schienen an einem stationären Träger vorbeibewegt. Hinsichtlich der durch das Abrollen auf der Schiene bewirkten Rotation der Glasstangen kommt es im wesentlichen auf die Relativbewegung zwischen Träger und Schiene an, was mit beiden vorgenannten Möglichkeiten, sowie allgemein durch eine Relativbewegung von Schienen und Träger, beziehungsweise dessen Aufnahmen erzielt werden kann.

Mittels der Erfindung wird eine sehr einfache Anordnung bereitgestellt, mit welcher eine gleichmäßige Nachbearbeitung der Enden der Glasstangen erzielt wird. Durch das Abrollen der Glasstangen während des Aufschmelzens in der Flamme wird eine gleichmäßige Erwärmung der Glasstangen-Enden erreicht. Durch das Aufschmelzen wird insbesondere auch eine glatte, feuerpolierte Oberfläche geschaffen.

Bevorzugt werden weiterhin beide Enden der Glasstangen, insbesondere das Material an den Stirnflächen aufgeschmolzen. Dazu sind Brenner auf beiden Seiten des Trägers angeordnet.

Eine Ausführungsform der Erfindung sieht vor, daß die Glasstangen durch eine seitlich vom Träger angeordnete Schiene einseitig angehoben werden und auf dieser Schiene abrollen. Gemäß einer anderen Ausgestaltung der Erfindung wird der Träger zwischen zwei beabstandeten Schienen hindurchbewegt, wobei in diesem Fall beide Enden angehoben werden.

Durch das Abrollen auf der Oberseite der Schiene rotieren die Glasstangen, sofern keine Reibung oder Schlupf die Drehung verlangsamt, mit einer Winkelgeschwindigkeit von v/r. Dabei bezeichnen v die Vorschubgeschwindigkeit und r den Radius der Glasstangen.

In weiterer bevorzugter Ausgestaltung der Erfindung ist vorgesehen, daß die Aufnahmen im Träger als Einbuchtungen oder Einsenkungen im Träger ausgestaltet sind. Diese können insbesondere der Form der Glasstangen angepaßt sein. Damit wird ein guter Wärmekontakt zwischen den Glasstangen und dem Träger geschaffen.

Um eine möglichst gleichmäßige Erwärmung des oder der Enden der Glasstangen zu bewerkstelligen, ist es weiterhin besonders bevorzugt wenn der Brenner mehrere Brennerdüsen aufweist, welche sich entlang der Vorschubrichtung erstrecken. Mit einem solchen Leistenbrenner werden die Enden der Glasstangen nicht nur durch eine einzelne Flamme, sondern durch mehrere Flammen nacheinander hindurchbewegt, während die Stangen abrollen.

Mit dem erfindungsgemäßen Verfahren können unter anderem Bruchkanten der Glasstangen geglättet werden. Ebenfalls möglich ist auch im Falle von Glasröhrchen, daß ein Ende dieser Glasröhrchen zugeschmolzen wird. Auf diese Weise werden einseitig geschlossene Glasröhrchen erhalten. Derartige Glasröhrchen eignen sich beispielsweise zur Verkapselung von Transpondern oder zur Herstellung von Ampullen.

Das Verfahren eignet sich insbesondere zur Behandlung kleinerer Glasstangen mit einem Durchmesser im Bereich von 0,5 Millimetern bis 30 Millimetern, bevorzugt im Bereich von 1 Millimeter bis 20 Millimetern. Um die verschiedenen Formate von Glasstangen verarbeiten zu können, können jeweils Träger bereitsgestellt werden, deren Aufnahmen für die jeweiligen genannten Durchmesser ausgebildet sind.

In Weiterbildung der Erfindung ist außerdem eine Heizeinrichtung für den Träger vorgesehen. Mit einer solchen Heizeinrichtung kann der Träger besonders vorteilhaft vorerhitzt werden. Insbesondere kann dieses Vorerhitzen des Trägers mit eingelegten Glasstangen erfolgen. Damit werden auch die auf dem Träger aufliegenden Teile der Glasstangen erwärmt. Dies ist unter anderem günstig, um Sprünge in den Glasstangen durch zu hohe Temperaturwechelspannungen zu vermeiden. Ein besonderer Vorteil ergibt sich besonders bei der Behandlung von Glasrohren. Die Erwärmung der Glasrohre auf dem Träger verhindert eine Ablagerung von Kondensaten innerhalb der Rohre beim Vorbeiführen am Brenner. Die Vorerwärmung wird bevorzugt mehrstufig durchgeführt. Insbesondere können dazu die Glasstangen auf einen in einem ersten Vorerwärmungsschritt Schritt vorerwärmten Träger abgelegt und Träger mit Glasstangen in zumindest einer weiteren Stufe vor dem Aufschmelzen weiter vorerwärmt werden.

Folgende Parameter haben sich als besonders günstig erwiesen, um einerseits Temperaturspannungen zu vermeiden und andererseits kleine Toleranzen in der Form der Enden der Glasstangen zu erreichen:

Die Vorschubgeschwindigkeit, mit welcher die Glasstangen am Brenner vorbeigeführt werden, liegt vorteilhaft im Bereich von 0,1 bis 10 cm/s, bevorzugt im Bereich von 0,5 bis 5 cm/s, besonders bevorzugt im Bereich von 0,8 bis 4 cm/s.

Weiterhin ist es günstig, wenn die Enden der Glasstangen vom Brenner für eine Dauer im Bereich von 3 bis 15 Sekunden, bevorzugt im Bereich von 5 bis 10 Sekunden beflammt werden.

Um das Beflammen der Enden der Glasstangen zu erleichtern, ist es außerdem günstig, wenn die abrollenden Enden der Glasstangen über die Schiene hinausragen.

Weiterhin ist es besonders vorteilhaft, wenn die Schiene zwischen Träger und Brenneröffnungen angeordnet ist. Auf dieses Weise kann die Schiene gleichzeitig als Abschirmung wirken, welche das Beflammen anderer Teile der Glasstangen außer deren Enden durch den Brenner verhindert. Neben einer oder mehreren Abrolleisten, auf welchen die Glasstangen durch Abrollen auf deren Oberseite in Rotation versetzt werden, ist es weiterhin auch von Vorteil, eine entlang der Vorschubrichtung verlaufende Anlaufleiste vorzusehen. Mit dieser Anlaufleiste werden die vorbeigeführten Glasstangen in ihrer Position quer zur Vorschubrichtung ausgerichtet, beziehungsweise geordnet. Um das Anheben der Glasstangen am Beginn der Schiene zu erleichtern, ist die Schiene weiterhin bevorzugt an zumindest einem Ende in Vorschubrichtung angeschrägt. Vorteilhaft werden beide Enden der Schiene angeschrägt, so daß die Glasstangen nach dem Abrollen auf der Oberseite der Schiene nicht abrupt in die Aufnahmen zurückfallen, sondern langsam auf der Schräge abrollend wieder vollständig in die Aufnahmen gelegt werden.

Hinsichtlich des Brenners wird weiterhin bevorzugt, daß das Brenngas nicht in den Düsen des Brenners, sondern außerhalb der Düsen in einem Mischer gemischt wird. Dieser ist vorzugsweise vor einer Gasmengenregelung angeordnet, so daß das Brenngas zusammen mit dem enthaltenen Oxidationsmittel, vorzugsweise von durch dem Mischer beigemischter Luft geregelt wird. Diese Maßnahme hat sich überraschend als sehr günstig erwiesen, um eine einfachere Regelung des Brenners zu erreichen. Insbesondere sind dann auch sehr niedrige Überdrücke exakt regelbar, um eine gleichmäßige Verbrennung und damit auch eine gleichmäßige Nachbehandlung der Glasstangen-Enden, insbesondere deren Stirnflächen zu erzielen.

In weiterer vorteilhafte Ausgestaltung der Erfindung ist ein Brenner vorgesehen, welcher zwei verschiedene Systeme von Gaszufuhrkanälen mit abwechselnd zueinander angeordneten Düsen aufweist. Damit kann unter anderem Brenngas über zumindest zwei Gaszufuhrkanäle zugeführt werden, die mit einer Vielzahl von abwechselnd - insbesondere entlang der Vorschubrichtung angeordneten Düsen verbunden sind. Auch können über die abwechselnd angeordneten Düsen oder Austrittsöffnungen anders als oben beschrieben verschiedene Komponenten des Brenngases getrennt zugeführt und geregelt werden und erst oberhalb der Düsen bei der Verbrennung miteinander mischen. Schließlich können mit solchen verschiedenen Systemen von Gaszufuhrkanälen auch zwei verschiedene Brenngase jeweils abwechselnd den Düsen zugeführt werden. Die verschiedenen Möglichkeiten erlauben so unter anderem eine feinfühlige, auf die Abmessungen der zu behandelnden Glasstangen abgestimmte Regelung und die Anpassung an verschiedene Glassorten.

Eine kompakte Bauform für den Brenner mit sehr feinen Kanälen für die Gaszufuhr kann weiterhin erhalten werden, wenn das Gasversorgungssystem des Brenners Vertiefungen in einem Brennerkörper aufweist, die seitlich, vorzugsweise durch die Schiene geschlossen werden und damit Kanäle für die Gaszufuhr bilden. Durch die Abdeckung mit der Schiene kann außerdem erreicht werden, daß die Austrittsöffnungen der Kanäle Brennerdüsen bilden, die sehr klein sind und direkt an der Schiene münden. Auf diese Weise wird erreicht, daß die Flammen des Brenners ebenfalls direkt an der Schiene brennen. Dies ist von Vorteil, da dann durch die Schiene eine scharfe Begrenzung der Heizzone entlang der zu behandelnden Glasstangen mit einer gezielten Erhitzung lediglich der über die Schiene überstehenden Enden der Glasstangen erreicht wird.

Die erfindungsgemäß herstellbaren Glasstangen zeichnen sich durch zumindest eine, vorzugsweise zwei feuerpolierte Endflächen aus. Dabei werden durch den erfindungsgemäß erreichten sehr gleichmäßigen und genau einstellbaren Aufschmelzprozeß sehr enge Toleranzen in den Abweichungen von Durchmesser und Länge erzielt. So können Glasstangen mit einer Längenmaß-Toleranz von höchstens 0.20 Millimetern hergestellt werden. Hinsichtlich des Außen- und/oder im Falle von Glasrohren auch des Innendurchmessers können Abweichungen von höchstens 0.08 Millimetern, vorzugsweise nur 0.05 Millimetern eingehalten werden.

Das Verfahren und die Vorrichtung, beziehungsweise die damit hergestellten Glasstangen können unter anderem vorteilhaft zur Herstellung von Reed-Relais, Sensoren, Transpondern und Lichtleitern eingesetzt werden.

Die Erfindung wird nachfolgend anhand von Ausführungsbeispielen und unter Bezugnahmen auf die beigefügten Zeichnungen näher erläutert. Dabei verweisen gleiche Bezugszeichen auf gleiche oder ähnliche Teile.

Es zeigen:
Fig. 1 eine Ansicht von Teilen einer erfindungsgemäßen Vorrichtung,
Fig. 2 eine Ansicht der in Fig. 1 dargestellten Anordnung in Richtung der Vorschubrichtung des Trägers,
Fig. 3 eine Variante mit beidseitig von Träger angeordneten Schienen gezeigt,
Fig. 4 eine Ansicht des Brenners,
Fig. 5 in Vergrößerung ein Ausschnitt des Bereichs X in Fig. 4,
Fig. 6 eine Ansicht eines Trägers,
Fig. 7 eine Seitenansicht einer Anordnung aus Abrollschiene und Träger,
Fig. 8 eine schematische Gesamtansicht eines Ausführungsbeispiels einer erfindungsgemäßen Vorrichtung,
Fig. 9 bis 11 Beispiele erfindungsgemäß hergestelltern Glasstangen.

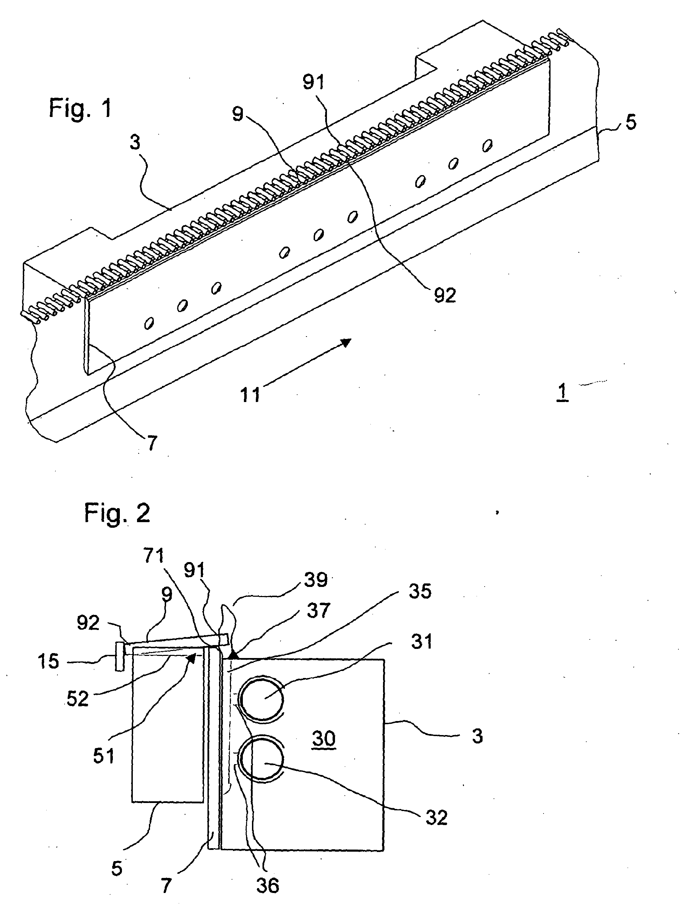

Fig. 1 zeigt Teile einer erfindungsgemäßen, als Ganzes mit dem Bezugszeichen 1 bezeichneten Vorrichtung. Die Vorrichtung 1 zum Behandeln der Enden 91, 92 von Glasstangen 9 umfasst einen Brenner 3, einen Träger 5 mit Aufnahmen zum Einlegen der Glasstangen 9, eine in Fig. 1 nicht dargestellte Vorschub-Einrichtung zum Vorbeiführen des Trägers 5 am Brenner 3 entlang einer Vorschub-Richtung 11, sowie eine Schiene 7, welche entlang des Trägers 5 verläuft und deren Oberseite im Bereich des Brenners 3 oberhalb des tiefsten Punktes der Aufnahmen verläuft, so daß in die Aufnahmen eingelegte Glasstangen 9 beim Vorbeiführen an den Flammen des Brenners 5 mittels der Vorschub-Einrichtung in den Aufnahmen durch die Schiene 7 angehoben werden und auf den Oberseiten der Schiene 7 abrollen. Dabei werden die Glasstangen 9 mit einer Vorschubgeschwindigkeit in Bereich von 0,1 bis 10 cm/s, bevorzugt im Bereich von 0,5 bis 5 cm/s, besonders bevorzugt im Bereich von 0,8 bis 4 cm/s am Brenner 3 vorbeigeführt. Die Vorschubgeschwindigkeit wird vorzugsweise dabei so eingestellt, daß die Enden der Glasstangen von Brenner für eine Dauer im Bereich von 3 bis 15 Sekunden, bevorzugt im Bereich von 5 bis 10 Sekunden durch die Flammen des Brenners 3 beflammt und das Material an den Stirnflächen aufgeschmolzen werden.

Wie in Fig. 1 zu erkennen ist, werden die Glasstangen so eingelegt, daß ihre Zylinderachsen quer zur Vorschubrichtung liegen, so daß sie entlang der Vorschubrichtung über ihren äußere Zylinderoberfläche abrollen können.

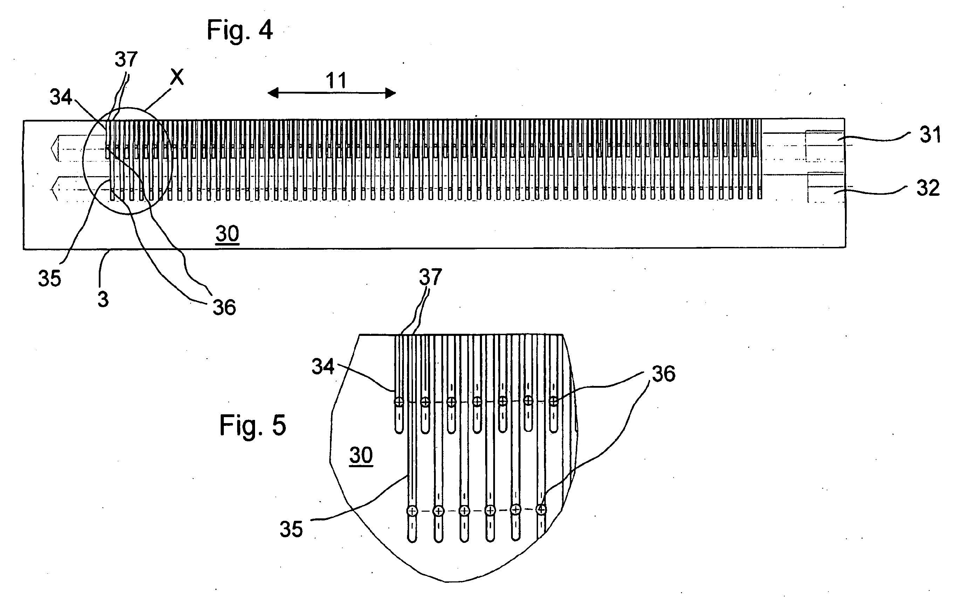

Die in Fig. 1 gezeigte Anordnung und der Mechanismus des wird nochmals genauer anhand der in Fig. 2 gezeigten Ansicht erläutert. Fig. 2 zeigt die Anordnung in Richtung der Vorschubrichtung 11. Der Brenner 3 ist als Leistenbrenner mit einer Vielzahl hintereinander angeordneter Düsen 37 ausgestaltet und umfasst dazu einen Grundkörper 30 mit Gaszufuhrkanälen 31, 32, die entlang der Vorschubrichtung verlaufen. Eine Vielzahl von entlang der Vorschubrichtung hintereinander angeordneten, in diesem Ausführungsbeispiel vertikal verlaufenden Kanälen 34, 35 ist mit den Gaszufuhrkanälen 31, 32 über Abzweigkanäle 36 verbunden. Dabei sind die Kanäle in zwei Gruppen aufgeteilt, wobei die erste Gruppe der Kanäle 34 mit dem Gaszufuhrkanal 31 und die zweite Gruppe der Kanäle 35 mit dem Gaszufuhrkanal 35 verbunden ist. Diese Ausgestaltung der Erfindung wird noch genauer anhand der Fig. 4 und 5 beschrieben. Die Kanäle 34, 35 münden in Öffnungen 37, welche die Brennerdüsen darstellen.

Die Kanäle 35 sind als Einfräsungen ausgeführt, welche durch die am Grundkörper 30 des Brenners 3 befestigte Schiene 7 abgeschlossen werden.

In der Oberseite des Trägers 5 sind halbzylindrische Aufnahmen 51 eingefügt, in welche die zu behandelnden Glasstangen 9 eingelegt werden. Der Träger 5 wird für das Feuerpolieren der Stangenenden nun so an der Schiene vorbeigefügt, daß der Sockelpunkt, beziehungsweise der tiefste Punkt 52 der Aufnahmen 51 unterhalb der Oberseite 71 verläuft. Dabei werden die Stangen, welche mit ihrer Mantelfläche auf dem Sockelpunkt 52 aufliegen, jeweils an einem Ende 91 durch die Schiene 7 wie in Fig. 2 gezeigt, angehoben und rollen auf der Oberseite 71 der Schiene 7 ab, während die Enden durch die an den Düsenöffnungen 37 erzeugten Flammen 39 beflammt werden und aufschmelzen, während die Stangen 9 abrollen.

Die Glasstangen werden jedoch nicht vollständig aus den Aufnahmen 51 herausgehoben, so daß die Stangen immer noch in den Aufnahmen geführt und weiterbewegt werden.

Die Enden 91 der Glasstangen ragen über die Schiene 7 hinaus und in die Flammen 39 hinein. Die zwischen dem Träger 5 und den Brenneröffnungen 37 angeordete Schiene 7 bewirkt außerdem vorteihaft eine Abschirmung gegen das Beflammen anderer Teile der Glasstangen 9 außer deren Ende 91. Damit wird verhindert, daß die Glasstangen zu weich werden und verbiegen oder sogar zwischen den Enden 91, 92 aufschmelzen können.

Die Glasstangen 9 auf dem Träger werden außerdem an einer entlang der Vorschubrichtung verlaufenden Anlaufleiste 15 vorbeigeführt und in ihrer Position quer zur Vorschubrichtung ausgerichtet. Durch die Ausrichtung quer zur Vorschubrichutng wird erreicht, daß die Enden 91 alle im Rahmen der Längentoleranz gleich weit über die Schiene 7 hinaus- und in die Flammen 39 des Brenners hineinragen.

Bei dem in Fig. 2 gezeigten Beispiel erfolgt das Anheben der Glasstangen außerdem einseitig mittels einer einzelnen Schiene.

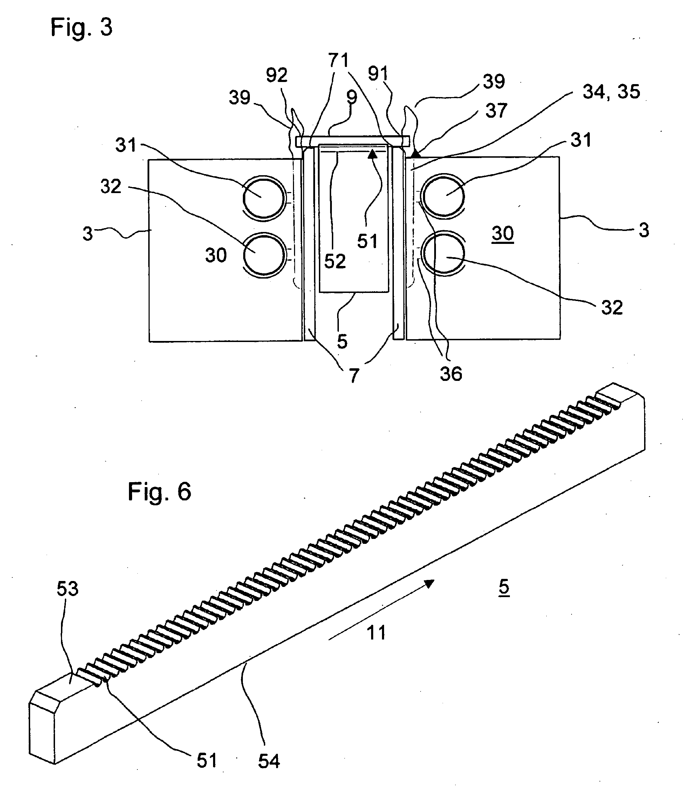

In Fig. 3 ist eine Variante mit beidseitig von Träger angeordneten Schienen 7 und Brennern 3 gezeigt. Bei dieser Variante wird demgemäß der Träger 3 zwischen den beiden beabstandeten Schienen 7 hindurchbewegt und beide Enden 91, 92 der Glasstangen 9 angehoben, so daß beide Enden 91, 92 der Glasstangen 9 über den Oberseiten 71 der Schienen 7 abrollen und deren äußerste Bereiche aufgeschmolzen werden.

Fig. 4 zeigt zur weiteren Verdeutlichung der Konstruktion eine Ansicht des Brenners 3, wie er in den Ausführungsbeispielen der Fig. 1 bis 3 eingesetzt wird. In Fig. 5 ist der mit X gekennzeichnete Ausschnitt vergrößert dargestellt.

Anhand der Fig. 4 und 5 ist zu erkennen, daß die sich entlang der Vorschubrichtung 11 angeordneten Düsen 37 abwechselnd zwei verschiedenen Gasversorgungssystemen mit zugeordnet sind, wobei das eine System über den Gasversorgungskanal 31 und das andere System über den Gasversorgungskanal 32 mit Gas beschickt wird. Die mit dem Gasversorgungskanal 31 verbundenen Kanäle 34 und die mit dem weiteren Gasversorgungskanal 32 verbundenen Kanäle 35 sind dabei jeweils als Vertiefungen im Brennerkörper 30 ausgebildet, welche dann durch die hier nicht dargestellte Schiene 7 seitlich geschlossen werden, so daß das Brenngas nur durch die Düsen 37 entweichen kann. Durch die abwechselnd an die Gaszufuhrkanäle 31, 32 angeschlossenen Düsen 37 kann der Brenner beispielsweise als außenmischender Brenner betrieben werden, indem Brenngas und Oxidationsmittel getrennt über die Kanäle 31, 32 zugeführt wird und durch jeweils benachbarte Düsen 37 entweicht. Ebenfalls möglich ist, vorgemischtes Brenngas zuzuführen, wobei zusätzlich die Möglichkeit besteht, unterschiedliche Brenngase über die Kanäle 31, 32 bereitzustellen und/oder die Gasmengen durch die Kanäle 31, 32 getrennt zu regeln.

In Fig. 6 ist eine Ansicht eines Ausfühurngsbeispiels eines Trägers 5 dargestellt. Der Träger 5 umfasst einen in Vorschubrichtung 11 langgestreckten Grundkörper, in dessen Oberseite 53 eine Vielzahl von in Vorschubrichtung hintereinander angeordneten Aufnahmen in Form von Einbuchtungen oder Einsenkungen. Diese Einbuchtungen sind halbzylindrisch mit Zylinderachse quer zur Längserstreckung des Trägerkörpers, beziehungsweise zur Vorschubrichtung. Dementsprechend können die zylindrischen Glasstangen 9 dann wie in Fig. 1 gezeigt quer zur Vorschubrichtung 11 in diese Vertiefungen eingelegt werden.

Die Unterseite 54 des Trägers 5 ist bei diesem Ausführungsbeispiel plan, so daß der Träger in einfacher Weise mit dieser Seite auf ein Transportband als Vorschub-Einrichtung zum Vorbeiführen des Trägers am Brenner aufgelegt werden kann.

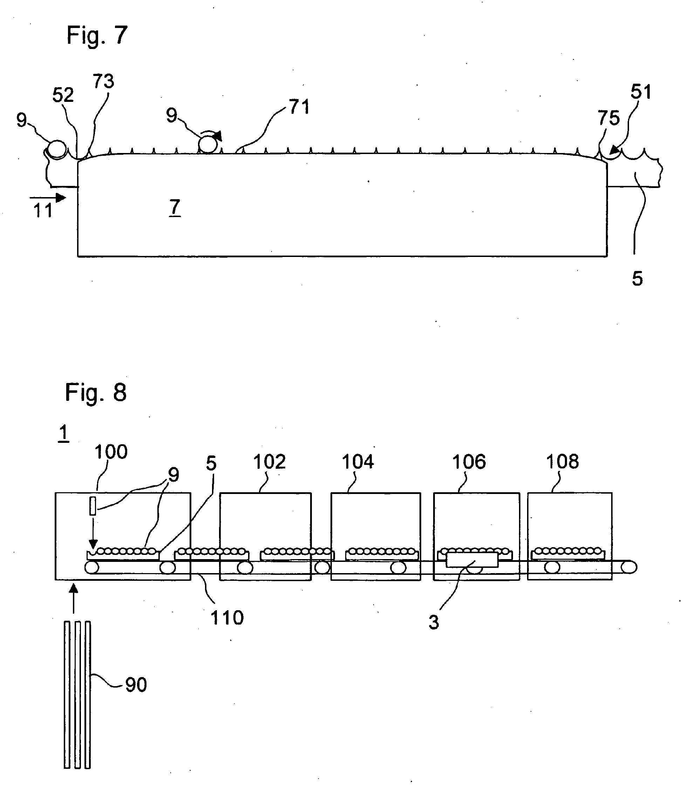

Fig. 7 zeigt in Seitenansicht ein Ausführungsbeispiel einer Schiene 7, wie sie bei den in Fig. 1 bis 3 gezeigten Anordnungen verwendet werden kann, sowie einen Träger 3 und den Mechanismus des Anhebens und Abrollens der Glasstangen auf dem Träger 5 mittels der Schiene 7.

Wie anhand von Fig. 7 nochmals verdeutlicht ist, liegt die Oberseite 71 der entlang des Trägers 5 in Vorschubrichtung 11 verlaufenden Schiene 7 so oberhalb des tiefsten Punktes 52 der Aufnahmen 51, daß in die Aufnahmen eingelegte Glasstangen 9 beim Vorbeiführen an der Flamme des Brenners mittels einer Vorschub-Einrichtung in den Aufnahmen durch die Schiene leicht angehoben werden und auf der Oberseite 71 der Schiene 7 abrollen. Zum Zwecke der Übersichtlichkeit sind in Fig. 7 nur zwei in die Aufnahmen 51 eingelegte Glasstangen 9 dargestellt.

Um das Anheben zu erleichtern, ist die Oberseite der Schiene am Ende 73 so weit angeschrägt, daß die Oberseite 71 der Schiene 7 an diesem Ende bis unter den tiefsten Punkt der Aufnahme, insbesondere aber unter den tiefsten Punkt der Mantelflächen der in die Aufnahmen 51 eingelegten Glasstangen 9 verläuft. Die Enden der Glasstangen 9 werden dann beim Vorbeiführen des Trägers 5 an der Schräge gleichmäßig bis auf die Höhe des ebenen Bereiches der Oberseite 71 der Schiene 7 angehoben und können dort abrollen. Auch das andere Ende 75 der Schiene 7 ist abgeschrägt, so daß die Glasstangen 9 nach Beendigung des Aufschmelzens wieder gleichmäßig die Schräge hinab abrollen und damit sanft in den Aufnahmen 51 abgelegt werden.

Fig. 8 zeigt in schematischer Ansicht ein Ausführungsbeispiel einer erfindungsgemäßen Vorrichtung 1 als Ganzes. Die Vorrichtung umfasst eine Einheit 100, in welcher lange Glasstangen 90 durch Brechen in kürzere Glasstangen 9 zerteilt und diese kürzeren Glasstangen 9 auf den Träger 5 abgelegt werden. Der Träger ist dabei vorzugsweise bereits vorewärtmt. Das Vorerwärmen kann elektrisch und/oder durch Heißluft erfolgen. Es werden mehrere Träger 5 verwendet, die hintereinander auf einem Transportband 110 als Vorschubeinrichtung befördert werden. Die in der Einheit 100 bestückten Träger 5 werden dann durch zwei Vorerwärmungsstufen 102 und 104 befördert, in welchen die Träger mitsamt den abgelegten Glasstangen 9 erwärmt wird. Für die erste Stufe 102 bietet sich eine elektrische Beheizung oder eine Erwärmung durch Warmluft an. Die Erwärmung in der zweiten Stufe 104 wird vorzugsweise mit einem oder mehreren Brennern durchgeführt.

Die durch diese mehrstufige Vorerwärmungseinrichtung mit Stufen 102, 104 erwärmten Träger und darauf transportierten Glasstangen 9 werden dann mittels des Transportbands 110 einer weiteren Einheit 106 zugeführt, in welcher mittels des erfindungsgemäßen Brenners 3 mit Schiene (nicht dargestellt) wie anhand der vorstehenden Figuren erläutert eine Flammpolitur der Stabenden durchgeführt wird. Schließlich werden die Träger mit den flammpolierten Glasstangen in einer Kühleinheit 108 definiert abgekühlt.

Die Träger 5 können nach Abschluß der in Fig. 8 gezeigten Bearbeitungsschritte bestückt bleiben und vom Transportband abgenommen werden, so daß sie gleichzeitig als Magazine für die behandelten Glasstangen für die Durchführung weiterer Herstellungsschritte dienen.

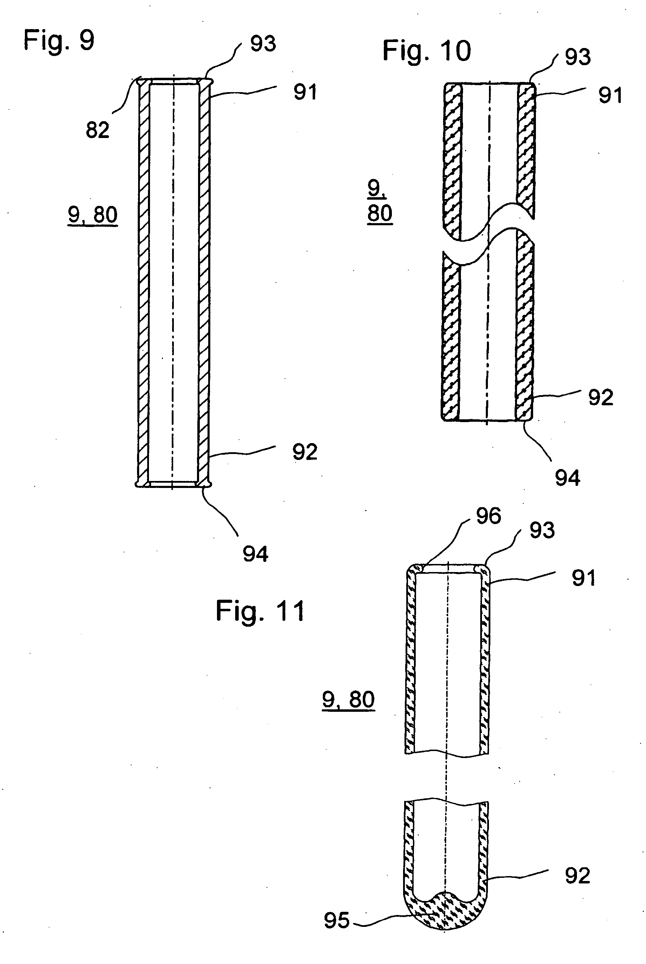

Die Fig. 9 bis 11 zeigen jeweils in Querschnittansicht Beispiele erfindungsgemäß hergestellter Glasstangen 9. Die Beispiele zeigen dabei jeweils Glasstangen in Form von Glasrohren 80. Weiterhin sind bei allen gezeigten Beispielen beide Enden 91, 92 durch Aufschmelzen des Materials an den Stirnflächen behandelt und feuerpoliert.

Bei dem in Fig. 9 gezeigten Beispiel ist durch das Aufschmelzen des Glases an den Stirnflächen 93, 94 jeweils ein kleiner Wulst 82 entstanden. Dieser Wulst kann unter anderem in vorteilhafter Weise für die Befestigung des Röhrchens verwendet werden. Bei dem in Fig. 10 dargestellten Beispiel wurden die Enden nur leicht angeschmolzen, so daß feuerpolierte Stirnflächen 93, 94 mit abgerundeten Kanten erhalten werden.

Bei dem in Fig. 11 dargestellten Beispiel ist im Unterschied zu den Beispiel der Fig. 9 und 10 das Ende 92 des Glasröhrchens 80 durch das Aufschmelzen zugeschmolzen worden, so daß ein einseitiger Verschluß 95 erhalten wird. Derartige Glasröhrchen können beispielsweise als Ampullen oder Verkapselungen für elektrische oder elektronische Komponenten verwendet werden. Diesbezüglich ist unter anderem an eine Verkapselung für Transponder oder Sensoren gedacht. Das andere Ende 91 dieses Ausführungsbeispiels ist durch das Aufschmelzen mit der erfindungsgemäßen Vorrichtung in einen nach innen gewölbten Kragen 96 umgeformt worden. Dieser Kragen 96 kann in vorteilhafter Weise für die Fixierung elektrischer oder elektronischer Komponenten oder auch zur Befestigung eines Verschlusses für dieses Ende 91 verwendet werden.

Bei allen gezeigten Beispielen von Glasröhrchen können sehr enge Toleranzen in deren Abmessungen erreicht werden. So können die maximalen Außen- und/oder minimalen Innendurchmesser an den Enden der gezeigten Rohre mit einer maximalen Abweichung von höchstens 0.08 Millimetern, im allgemeinen sogar nur 0.05 Millimetern gefertigt werden. Auch können die Glasröhrchen 80 hinsichtlich des Längenmaßes mit Abweichungen von höchstens 0.20 Millimetern hergestellt werden. Diese hohe Präzision resultiert aus dem erfindungsgemäß erreichten sehr gleichmäßigen Aufschmelzvorgang, so daß für alle Glasstangen gleiche Bedingungen hinsichtlich der Temperaturverteilung und der Behandlungszeit geschaffen und Gestaltabweichungen durch das Aufschmelzen auf ein Minimum reduziert werden.

## Patentansprüche

1. Verfahren zum Behandeln der Enden von Glasstangen bei welchem Glasstangen (9) in Aufnahmen (51) eines Trägers (5) eingelegt werden, **dadurch gekennzeichnet, dass** die Glasstangen mit dem Träger (5) an einem Brenner (3) und zumindest einer Schiene entlang einer Vorschubrichtung (11) vorbeibewegt werden, wobei die Flamme (39) des Brenners (3) zumindest ein Ende der Glasstangen (9) aufschmilzt, und wobei die Glasstangen (9) durch die Schiene (7) in den Aufnahmen (51) angehoben werden und auf der Schiene (7) abrollen, so daß die Glasstangen (9) während des Aufschmelzens in Rotation versetzt werden.

2. Verfahren gemäß Anspruch 1, **dadurch gekennzeichnet, daß** die Glasstangen (9) durch eine seitlich vom Träger (5) angeordnete Schiene (7) einseitig angehoben werden und auf dieser Schiene (7) abrollen.

3. Verfahren gemäß Anspruch 1, **dadurch gekennzeichnet, daß** der Träger (5) zwischen zwei beabstandeten Schienen (7) hindurchbewegt wird und beide Enden der Glasstangen (9) angehoben werden.

4. Verfahren gemäß einem der vorstehenden Ansprüche, **dadurch gekennzeichnet, daß** beide Enden der Glasstangen (9) aufgeschmolzen werden.

5. Verfahren gemäß Anspruch 1, **dadurch gekennzeichnet, daß** die Glasstangen (9) in entsprechend ausgestaltete Aufnahmen (51) quer zur Vorschubrichtung (11) eingelegt werden.

6. Verfahren gemäß einem der vorstehenden Ansprüche, **dadurch gekennzeichnet, daß** die Glasstangen (9) mit einer Winkelgeschwindigkeit von v/r rotieren, wobei v die Vorschubgeschwindigkeit (11) und r den Radius der Glasstangen (9) bezeichnen.

7. Verfahren gemäß einem der vorstehenden Ansprüche, **dadurch gekennzeichnet, daß** die Glasstangen (9) in die Aufnahmen (51) im Träger (5) abgelegt werden, welche als Einbuchtungen oder Einsenkungen im Träger (5) ausgestaltet sind.

8. Verfahren gemäß einem der vorstehenden Ansprüche, **dadurch gekennzeichnet, daß** die Enden der Glasstangen (9) durch mehrere Flammen (39) nacheinander hindurchbewegt werden, während die Stangen (9) abrollen.

9. Verfahren gemäß einem der vorstehenden Ansprüche, **dadurch gekennzeichnet, daß** durch das Aufschmelzen des Endes der Glasstange (9) eine Bruchkante der Glasstange (9) an diesem Ende geglättet wird.

10. Verfahren gemäß einem der vorstehenden Ansprüche, **dadurch gekennzeichnet, daß** ein Ende von Glasröhrchen durch das Aufschmelzen zugeschmolzen wird.

11. Verfahren gemäß einem der vorstehenden Ansprüche, **dadurch gekennzeichnet, daß** Glasstangen (9) mit einem Durchmesser im Bereich von 0,5 Millimetern bis 30 Millimetern, bevorzugt im Bereich von 1 Millimeter bis 20 Millimetern behandelt werden.

12. Verfahren gemäß einem der vorstehenden Ansprüche, **dadurch gekennzeichnet, daß** der Träger (5), vorzugsweise der Träger (5) mit eingelegten Glasstangen (9) vorgeheizt wird.

13. Verfahren gemäß Anspruch 12, **dadurch gekennzeichnet, daß** die Glasstangen (9) auf den vorzugsweise vorerwärmten Träger (5) abgelegt und Träger (5) mit Glasstangen (9) in zumindest einer weiteren Stufe vor dem Aufschmelzen vorerwärmt werden.

14. Verfahren gemäß einem der vorstehenden Ansprüche, **dadurch gekennzeichnet, daß** die Glasstangen (9) mit einer Vorschubgeschwindigkeit (11) in Bereich von 0,1 bis 10 cm/s, bevorzugt im Bereich von 0,5 bis 5 cm/s, besonders bevorzugt im Bereich von 0,8 bis 4 cm/s am Brenner (3) vorbeigeführt werden.

15. Verfahren gemäß einem der vorstehenden Ansprüche, **dadurch gekennzeichnet, daß** die Enden der Glasstangen (9) von Brenner (3) für eine Dauer im Bereich von 3 bis 15 Sekunden, bevorzugt im Bereich von 5 bis 10 Sekunden beflammt werden.

16. Verfahren gemäß einem der vorstehenden Ansprüche, **dadurch gekennzeichnet, daß** die abrollenden Enden der Glasstangen (9) über die Schiene (7) hinausragen.

17. Verfahren gemäß einem der vorstehenden Ansprüche, **dadurch gekennzeichnet, daß** die Schiene (7) das Beflammen anderer Teile der Glasstangen (9) außer deren Enden durch den Brenner (3) abschirmt.

18. Verfahren gemäß einem der vorstehenden Ansprüche, **dadurch gekennzeichnet, daß** die Glasstangen (9) auf dem Träger (5) an einer entlang der Vorschubrichtung (11) verlaufenden Anlaufleiste vorbeigeführt und in ihrer Position quer zur Vorschubrichtung (11) ausgerichtet werden.

19. Verfahren gemäß einem der vorstehenden Ansprüche, **dadurch gekennzeichnet, daß** das Brenngas außerhalb der Düsen (37) in einem Mischer vor einer Regelung gemischt wird.

20. Verfahren gemäß einem der vorstehenden Ansprüche, **dadurch gekennzeichnet, daß** Brenngas über zumindest zwei Gaszufuhrkanäle (31, 32) zugeführt wird, die mit abwechselnd angeordneten Düsen (37) verbunden sind.

21. Vorrichtung zum Behandeln der Enden von Glasstangen (9), insbesondere zur Durchführung eines Verfahrens gemäß einem der vorstehenden Ansprüche, umfassend einen Brenner, einen Träger (5) mit Aufnahmen (51) zum Einlegen von Glasstangen (9), und eine Vorschub-Einrichtung zum Vorbeiführen des Trägers (5) am Brenner, **gekennzeichnet durch** zumindest eine Schiene (7), welche entlang des Trägers (5) verläuft und deren Oberseite im Bereich des Brenners so oberhalb des tiefsten Punktes der Aufnahmen (51) verläuft, daß in die Aufnahmen (51) eingelegte Glasstangen (9) beim Vorbeiführen an der Flamme (39) des Brenners mittels der Vorschub-Einrichtung in den Aufnahmen (51) **durch** die Schiene (7) angehoben werden und auf der Oberseite der Schiene (7) abrollen.

22. Vorrichtung gemäß vorstehendem Anspruch, **gekennzeichnet durch** eine einzelne seitlich vom Träger (5) angeordnete Schiene (7), mit welcher die Glasstangen (9) einseitig angehoben werden und auf dieser Schiene (7) abrollen.

23. Vorrichtung gemäß Anspruch 22, **dadurch gekennzeichnet, daß** die Vorschub-Einrichtung den Träger (5) zwischen zwei beabstandeten Schienen (7) hindurchbewegt, so daß beide Enden der Glasstangen (9) angehoben werden.

24. Vorrichtung gemäß einem der vorstehenden Ansprüche, **dadurch gekennzeichnet, daß** die Aufnahmen (51) für das Einlegen der Glasstangen (9) quer zur Vorschubrichtung (11) ausgestaltet sind.

25. Vorrichtung gemäß einem der vorstehenden Ansprüche, **dadurch gekennzeichnet, daß** Brenner (3) auf beiden Seiten des Trägers (5) angeordnet sind.

26. Vorrichtung gemäß einem der vorstehenden Ansprüche, **dadurch gekennzeichnet, daß** Aufnahmen (51) im Träger (5) als Einbuchtungen oder Einsenkungen im Träger (5) ausgestaltet sind.

27. Vorrichtung gemäß einem der vorstehenden Ansprüche, **dadurch gekennzeichnet, daß** der Brenner (3) mehrere Brennerdüsen aufweist, welche entlang der Vorschubrichtung (11) angeordnet sind.

28. Vorrichtung gemäß einem der vorstehenden Ansprüche, **dadurch gekennzeichnet, daß** die Aufnahmen (51) des Trägers (5) für das Einlegen von Glasstangen (9) mit einem Durchmesser im Bereich von 0,5 Millimetern bis 30 Millimetern, bevorzugt im Bereich von 1 Millimeter bis 20 Millimetern ausgebildet sind.

29. Vorrichtung gemäß einem der vorstehenden Ansprüche, **gekennzeichnet durch** eine Heizeinrichtung für den Träger (5).

30. Vorrichtung gemäß einem der vorstehenden Ansprüche, **gekennzeichnet durch** eine ein- oder mehrstufige Vorerwärmungseinrichtung zum Vorerwärmen der auf dem Träger (5) abgelegten Glasstangen (9).

31. Vorrichtung gemäß einem der vorstehenden Ansprüche, **dadurch gekennzeichnet, daß** die Schiene (7) zwischen Träger (5) und Brenneröffnung angeordnet ist.

32. Vorrichtung gemäß einem der vorstehenden Ansprüche, **dadurch gekennzeichnet, daß** die Schiene (7) zum Anheben der Glasstangen (9) an zumindest einem Enden in Vorschubrichtung (11) angeschrägt ist.

33. Vorrichtung gemäß einem der vorstehenden Ansprüche, **dadurch gekennzeichnet, daß** die Vorschub-Einrichtung ein Transportband (110) zum Ablegen des Trägers (5) umfasst.

34. Vorrichtung gemäß einem der vorstehenden Ansprüche, gekennzzeichnet durch eine entlang der Vorschubrichtung (11) verlaufende Anlaufleiste, an welcher vorbeigeführte Glasstangen (9) in ihrer Position quer zur Vorschubrichtung (11) ausgerichtet werden.

35. Vorrichtung gemäß einem der vorstehenden Ansprüche, **gekennzeichnet durch** einen vor einer Gasmengenregelung angeordneten Mischer für das Brenngas des Brenners (3).

36. Vorrichtung gemäß einem der vorstehenden Ansprüche, **dadurch gekennzeichnet, daß** der Brenner (3) zwei verschiedene Systeme von Gaszufuhrkanälen mit abwechselnd zueinander angeordneten Düsen (37) aufweist.

37. Vorrichtung gemäß einem der vorstehenden Ansprüche, **dadurch gekennzeichnet, daß** das Gasversorgungssystem des Brenners Vertiefungen in einem Brennerkörper (30) aufweist, die durch die Schiene (7) seitlich geschlossen werden und damit Kanäle (34, 35) für die Gaszufuhr bilden.

38. Verwendung eines Verfahrens oder einer Vorrichtung (1) gemäß einem der vorstehenden Ansprüche zur Herstellung von Reed-Relais, Sensoren, Transpondern, Lichtleitern.

## Claims

1. Method for treating the ends of glass rods in which glass rods (9) are inserted into receptacle (51) of a carrier (5), **characterised in that** the glass rods are moved with the carrier (5) past a burner (3) and at least one rail in an advancing direction (11), wherein the flame (39) of the burner (3) melts at least one end of the glass rods (9), and wherein the glass rods (9) are raised by the rail (7) in the receptacles (51) and roll on the rail (7), so that the glass rods (9) are caused to rotate during the melting process.

2. Method as claimed in claim 1, **characterised in that** the glass rods (9) are raised on one side by a rail (7) disposed to the side of the carrier (5) and roll on this rail (7).

3. Method as claimed in claim 1, **characterised in that** the carrier (5) is moved through between two spaced-apart rails (7) and both ends of the glass rods (9) are raised.

4. Method as claimed in any one of the preceding claims, **characterised in that** both ends of the glass rods (9) are melted.

5. Method as claimed in claim 1, **characterised in that** the glass rods (9) are inserted into correspondingly configured receptacles (51) transversely with respect to the advancing direction (11).

6. Method as claimed in any one of the preceding claims, **characterised in that** the glass rods (9) rotate at an angular speed of v/r, wherein v designates the advancing speed (11) and r designates the radius of the glass rods (9).

7. Method as claimed in any one of the preceding claims, **characterised in that** the glass rods (9) are placed into the receptacles (51) in the carrier (5) which are configured as recesses or depressions in the carrier (5).

8. Method as claimed in any one of the preceding claims, **characterised in that** the ends of the glass rods (9) are moved one after the other through several flames (39), while the rods (9) roll.

9. Method as claimed in any one of the preceding claims, **characterised in that** by melting the end of the glass rod (9) a breaking edge of the glass rod (9) is smoothed at this end.

10. Method as claimed in any one of the preceding claims, **characterised in that** one end of small glass tubes is sealed by the melting process.

11. Method as claimed in any one of the preceding claims, **characterised in that** glass rods (9) having a diameter in the range of 0.5 mm to 30 mm, preferably in the range of 1 mm to 20 mm, are treated.

12. Method as claimed in any one of the preceding claims, **characterised in that** the carrier (5), preferably the carrier (5) with inserted glass rods (9), is preheated.

13. Method as claimed in claim 12, **characterised in that** the glass rods (9) are placed onto the preferably preheated carrier (5) and the carrier (5) together with the glass rods (9) are preheated in at least one further stage before the melting process.

14. Method as claimed in any one of the preceding claims, **characterised in that** the glass rods (9) are guided past the burner (3) at an advancing speed (11) in the range of 0.1 to 10 cm/s, preferably in the range of 0.5 to 5 cm/s, particularly preferably in the range of 0.8 to 4 cm/s.

15. Method as claimed in any one of the preceding claims, **characterised in that** the ends of the glass rods (9) are flame-treated by the burner (3) for a duration in the range of 3 to 15 s, preferably in the range of 5 to 10 s.

16. Method as claimed in any one of the preceding claims, **characterised in that** the rolling ends of the glass rods (9) protrude beyond the rail (7).

17. Method as claimed in any one of the preceding claims, **characterised in that** the rail (7) shields other parts of the glass rods (9) apart from the ends thereof from the flame-treatment by the burner (3).

18. Method as claimed in any one of the preceding claims, **characterised in that** the glass rods (9) on the carrier (5) are guided past a run-up strip extending in the advancing direction (11) and are aligned in terms of their position transversely with respect to the advancing direction (11).

19. Method as claimed in any one of the preceding claims, **characterised in that** the burnable gas is mixed in a mixer outside the nozzles (37) in advance of a regulator.

20. Method as claimed in any one of the preceding claims, **characterised in that** burnable gas is fed via at least two gas feed channels (31, 32) which are connected to nozzles (37) which are disposed in alternating fashion.

21. Device for treating the ends of glass rods (9), in particular for carrying out a method as claimed in any one of the preceding claims, comprising a burner, a carrier (5) having receptacles (51) for the insertion of glass rods (9), and an advancing device for guiding the carrier (5) past the burner, **characterised by** at least one rail (7) which extends along the carrier (5) and whose upper side extends in the region of the burner above the lowest point of the receptacles (51) such that as glass rods (9) which are inserted into the receptacles (51) are guided past the flame (39) of the burner they are raised by the rail (7) by means of the advancing device in the receptacles (51) and roll on the upper side of the rail (7).

22. Device as claimed in the preceding claim, **characterised by** an individual rail (7) which is disposed to the side of the carrier (5) and with which the glass rods (9) are raised on one side and roll on this rail (7).

23. Device as claimed in claim 22, **characterised in that** the advancing device moves the carrier (5) through between two spaced-apart rails (7), so that both ends of the glass rods (9) are raised.

24. Device as claimed in any one of the preceding claims, **characterised in that** the receptacles (51) for inserting the glass rods (9) are configured transversely with respect to the advancing direction (11).

25. Device as claimed in any one of the preceding claims, **characterised in that** burners (3) are disposed on both sides of the carrier (5).

26. Device as claimed in any one of the preceding claims, **characterised in that** receptacles (51) in the carrier (5) are configured as recesses or depressions in the carrier (5).

27. Device as claimed in any one of the preceding claims, **characterised in that** the burner (3) comprises several burner nozzles which are disposed in the advancing direction (11).

28. Device as claimed in any one of the preceding claims, **characterised in that** the receptacles (51) of the carrier (5) for the insertion of glass rods (9) are formed having a diameter in the range of 0.5 mm to 30 mm, preferably in the range of I mm to 20 mm.

29. Device as claimed in any one of the preceding claims, **characterised by** a heating device for the carrier (5).

30. Device as claimed in any one of the preceding claims, **characterised by** a single-stage or muttipte-stage preheating device for preheating the glass rods (9) placed on the carrier (5).

31. Device as claimed in any one of the preceding claims, **characterised in that** the rail (7) is disposed between the carrier (5) and the burner opening.

32. Device as claimed in any one of the preceding claims, **characterised in that** the rail (7) for raising the glass rods (9) is bevelled at at least one end in the advancing direction (11).

33. Device as claimed in any one of the preceding claims, **characterised in that** the advancing device comprises a conveyor belt (110) for the carrier (5) to be placed on.

34. Device as claimed in any one of the preceding claims, **characterised by** a run-up strip which extends in the advancing direction (11) and on which glass rods (9) which have been guided past said run-up strip are aligned in terms of their position transversely with respect to the advancing direction (11).

35. Device as claimed in any one of the preceding claims, **characterised by** a mixer, which is disposed in advance of a gas quantity regulator, for the burnable gas of the burner (3).

36. Device as claimed in any one of the preceding claims, **characterised in that** the burner (3) comprises two different systems of gas feed channels having nozzles (37) disposed in mutually alternating fashion.

37. Device as claimed in any one of the preceding claims, **characterised in that** the gas supply system of the burner comprises depressions in a burner body (30) which are closed laterally by the rail (7) and thus form channels (34, 35) for the gas supply.

38. Use of a method or a device (1) as claimed in any one of the preceding claims for the production of reed-relays, sensors, transponders, light conductors.

## Revendications

1. Procédé pour traiter les extrémités de tiges de verre, dans lequel des tiges de verre (9) sont introduites dans des logements (51) d'un support (5), **caractérisé en ce que** les tiges de verre sont déplacées avec le support (5) en passant devant un brûleur (3) et au moins un rail le long d'une direction d'avancement (11), la flamme (39) du brûleur (3) fondant au moins une extrémité des tiges de verre (9), et les tiges de verre (9) étant soulevées par le rail (7) dans les logements (51) et roulant sur le rail (7), de sorte que les tiges de verre (9) sont mises en rotation pendant la fusion.

2. Procédé selon la revendication 1, **caractérisé en ce que** les tiges de verre (9) sont soulevées d'un côté par un rail (7) disposé sur le côté du support (5) et roulent sur ce rail (7).

3. Procédé selon la revendication 1, **caractérisé en ce que** le support (5) est déplacé entre deux rails (7) espacés et les deux extrémités des tiges de verre (9) sont soulevées.

4. Procédé selon l'une quelconque des revendications précédentes, **caractérisé en ce que** les deux extrémités des tiges de verre (9) sont fondues.

5. Procédé selon la revendication 1, **caractérisé en ce que** les tiges de verre (9) sont introduites dans des logements (51) de conception appropriée transversalement à la direction d'avancement (11).

6. Procédé selon l'une quelconque des revendications précédentes, **caractérisé en ce que** les tiges de verre (9) tournent avec une vitesse angulaire de v/r, v et r désignant respectivement la vitesse d'avancement (11) et le rayon des tiges de verre (9).

7. Procédé selon l'une quelconque des revendications précédentes, **caractérisé en ce que** les tiges de verre (9) sont déposées dans les logements (51) du support (5), lesquels sont conçus sous forme de creux ou d'affaissements dans le support (5).

8. Procédé selon l'une quelconque des revendications précédentes, **caractérisé en ce que** les extrémités des tiges de verre (9) sont déplacées à travers plusieurs flammes (39) les unes après les autres, alors que les tiges (9) roulent.

9. Procédé selon l'une quelconque des revendications précédentes, **caractérisé en ce qu'**une arête de rupture de la tige de verre (9) est lissée sur cette extrémité par la fusion de l'extrémité de la tige de verre (9).

10. Procédé selon l'une quelconque des revendications précédentes, **caractérisé en ce qu'**une extrémité de petits tubes de verre est fondue par la fusion.

11. Procédé selon l'une quelconque des revendications précédentes, **caractérisé en ce que** des tiges de verre (9) présentant un diamètre de l'ordre de 0,5 millimètre à 30 millimètres, de préférence de l'ordre de 1 millimètre à 20 millimètres sont traitées.

12. Procédé selon l'une quelconque des revendications précédentes, **caractérisé en ce que** le support (5), de préférence le support (5) avec des tiges de verre (9) introduites est préchauffé.

13. Procédé selon la revendication 12, **caractérisé en ce que** les tiges de verre (9) sont déposées sur le support (5) de préférence préchauffé et les supports (5) avec des tiges de verre (9) sont préchauffés dans au moins un autre niveau avant la fusion.

14. Procédé selon l'une quelconque des revendications précédentes, **caractérisé en ce que** les tiges de verre (9) sont guidées en passant devant le brûleur (3) avec une vitesse d'avancement (11) de l'ordre de 0,1 à 10 cm/s, de préférence de l'ordre de 0,5 à 5 cm/s, avec une préférence particulière de l'ordre de 0,8 à 4 cm/s.

15. Procédé selon l'une quelconque des revendications précédentes, **caractérisé en ce que** les extrémités des tiges de verre (9) sont enflammées par le brûleur (3) pour une durée de l'ordre de 3 à 15 s, de préférence de l'ordre de 5 à 10 s.

16. Procédé selon l'une quelconque des revendications précédentes, **caractérisé en ce que** les extrémités roulantes des tiges de verre (9) dépassent du rail (7).

17. Procédé selon l'une quelconque des revendications précédentes, **caractérisé en ce que** le rail (7) protège l'inflammation d'autres parties des tiges de verre (9) en dehors de leurs extrémités par le brûleur (3).

18. Procédé selon l'une quelconque des revendications précédentes, **caractérisé en ce que** les tiges de verre (9) sont guidées sur le support (5) en passant devant une baguette de démarrage agencée le long de la direction d'avancement (11) et sont orientées dans leur position transversalement à la direction d'avancement (11).

19. Procédé selon l'une quelconque des revendications précédentes, **caractérisé en ce que** le gaz de combustion est mélangé à l'extérieur des buses (37) dans un mélangeur avant un réglage.

20. Procédé selon l'une quelconque des revendications précédentes, **caractérisé en ce que** le gaz de combustion est amené par au moins deux conduits d'arrivée de gaz (31, 32), qui sont reliés à des buses (37) disposées de façon alternative.

21. Dispositif pour traiter les extrémités de tiges de verre (9), en particulier pour la mise en oeuvre d'un procédé selon l'une quelconque des revendications précédentes, comprenant un brûleur, un support (5) avec des logements (51) pour l'introduction de tiges de verre (9), et un dispositif d'avancement pour le guidage du support (5) en passant devant le brûleur, **caractérisé par** au moins un rail (7), qui s'étend le long du support (5) et dont le côté supérieur est agencé dans la zone du brûleur au-dessus du point le plus bas des logements (51) de telle sorte que des tiges de verre (9) introduites dans les logements (51) sont soulevées par le rail (7) lors du guidage devant la flamme (39) du brûleur au moyen du dispositif d'avancement dans les logements (51) et roulent sur le côté supérieur du rail (7).

22. Dispositif selon la revendication précédente, **caractérisé par** un rail (7) individuel disposé sur le côté du support (5), avec lequel les tiges de verre (9) sont soulevées sur un côté et roulent sur ce rail (7).

23. Dispositif selon la revendication 22, **caractérisé en ce que** le dispositif d'avancement déplace le support (5) entre deux rails (7) espacés, de sorte que les deux extrémités des tiges de verre (9) sont soulevées.

24. Dispositif selon l'une quelconque des revendications précédentes, **caractérisé en ce que** les logements (51) sont conçus pour l'introduction des tiges de verre (9) transversalement au sens d'avancement (11).

25. Dispositif selon l'une quelconque des revendications précédentes, **caractérisé en ce que** des brûleurs (3) sont disposés sur les deux côtés du support (5).

26. Dispositif selon l'une quelconque des revendications précédentes, **caractérisé en ce que** des logements (51) dans le support (5) sont conçus sous forme de creux ou d'affaissement dans le support (5).

27. Dispositif selon l'une quelconque des revendications précédentes, **caractérisé en ce que** le brûleur (3) présente plusieurs buses de brûleur qui sont disposées le long du sens d'avancement (11).

28. Dispositif selon l'une quelconque des revendications précédentes, **caractérisé en ce que** les logements (51) du support (5) sont conçus pour l'introduction de tiges de verre (9) présentant un diamètre de l'ordre de 0,5 millimètre à 30 millimètres, de préférence de l'ordre de 1 millimètre à 20 millimètres.

29. Dispositif selon l'une quelconque des revendications précédentes, **caractérisé par** un dispositif de chauffage pour le support (5).

30. Dispositif selon l'une quelconque des revendications précédentes, **caractérisé par** un dispositif de préchauffage à un niveau ou plusieurs niveaux pour le préchauffage des tiges de verre (9) déposées sur le support (5).

31. Dispositif selon l'une quelconque des revendications précédentes, **caractérisé en ce que** le rail (7) est disposé entre le support (5) et l'ouverture du brûleur.

32. Dispositif selon l'une quelconque des revendications précédentes, **caractérisé en ce que** le rail (7) est chanfreiné pour le soulèvement des tiges de verre (9) sur au moins une extrémité dans le sens d'avancement (11).

33. Dispositif selon l'une quelconque des revendications précédentes, **caractérisé en ce que** le dispositif d'avancement comprend une bande transporteuse (110) pour la dépose du support (5).

34. Dispositif selon l'une quelconque des revendications précédentes, **caractérisé par** une baguette de démarrage agencée le long du sens d'avancement (11), sur laquelle des tiges de verre (9) guidées sont orientées dans leur position transversalement au sens d'avancement (11).

35. Dispositif selon l'une quelconque des revendications précédentes, **caractérisé par** un mélangeur disposé en amont d'un réglage de quantité de gaz pour le gaz de combustion du brûleur (3).

36. Dispositif selon l'une quelconque des revendications précédentes, **caractérisé en ce que** le brûleur (3) présente deux systèmes différents de conduits d'arrivée de gaz avec des buses (37) disposées en alternance les unes par rapport aux autres.

37. Dispositif selon l'une quelconque des revendications précédentes, **caractérisé en ce que** le système d'alimentation en gaz du brûleur présente des cavités dans un corps de brûleur (30) qui sont fermées sur le côté par le rail (7) et forment donc des conduits (34, 35) pour l'arrivée de gaz.

38. Utilisation d'un procédé ou d'un dispositif (1) selon l'une quelconque des revendications précédentes pour la fabrication de relais à tiges, capteurs, transpondeurs et guides d'ondes optiques.
